# FASCICULE DE BREVET EUROPEEN

(11) **EP 1 697 668 B1**
(45) Date de publication et mention de la délivrance du brevet: **03.08.2011**
(21) Numéro de dépôt: 04816375.2
(22) Date de dépôt: 13.12.2004
(51) Int. Cl.: F16K 11/085

(54) **VANNE DE REGULATION THERMIQUE POUR UN CIRCUIT DE CIRCULATION DE FLUIDE, EN PARTICULIER POUR UN CIRCUIT DE REFROIDISSEMENT D'UN MOTEUR**
WÄRMEREGELVENTIL FÜR EIN FLUIDSTROMSYSTEM, INSBESONDERE FÜR EIN MOTORKÜHLSYSTEME
THERMAL CONTROL VALVE FOR A FLUID FLOW SYSTEM, IN PARTICULAR, FOR AN ENGINE-COOLING SYSTEM

(30) Priorité: 12.12.2003 FR 0314610
(43) Date de publication de la demande: 06.09.2006
(73) Titulaire: VALEO SYSTEMES THERMIQUES, 78320 Le Mesnil Saint-Denis (FR)
(72) Inventeur: CHANFREAU, Matthieu, F-78650 Saulx Marchais (FR); VACCA, Frédéric, F-78910 Behoust (FR); FARKH, Alain, F-78490 Montfort l'Amaury (FR)
(74) Mandataire: Rolland, Jean-Christophe
(86) Numéro de dépôt international: PCT/FR2004/003202
(87) Numéro de publication internationale: WO 2005/059416

(56) Documents cités:
- EP-A- 0 688 986
- EP-A- 1 197 644
- FR-A- 2 827 359
- FR-A- 2 827 360
- FR-A- 2 827 361
- US-A- 3 966 119
- US-B2- 6 343 746

## Description

L'invention se rapporte à une vanne de commande pour un circuit de circulation de fluide, ainsi qu'aux circuits équipés d'une telle vanne.

Elle s'applique notamment à la réalisation d'un circuit de refroidissement d'un moteur thermique de véhicule automobile.

Un tel circuit de refroidissement est parcouru par un fluide de refroidissement, habituellement de l'eau additionnée d'un antigel, qui circule en circuit fermé sous l'action d'une pompe de circulation.

Généralement, un tel circuit de refroidissement comprend plusieurs branches, dont une branche qui contient un radiateur de refroidissement, une branche qui constitue une dérivation du radiateur de refroidissement et une branche qui contient un radiateur appelé "aérotherme", servant au chauffage de l' habitacle.

Il est connu d'utiliser une vanne thermostatique qui comprend une entrée de fluide reliée à la sortie du moteur et deux sorties de fluide qui correspondent respectivement à la branche contenant le radiateur de refroidissement et à la branche formant dérivation.

Lors du démarrage à froid du moteur, et tant que la température du fluide de refroidissement n'atteint pas un certain seuil, la vanne fait circuler le fluide de refroidissement dans une branche de dérivation en mettant en court-circuit le radiateur de refroidissement. Dès que la température du fluide de refroidissement atteint et dépasse le seuil précité, le fluide de refroidissement traverse le radiateur de refroidissement et contourne la branche de dérivation.

Généralement, le fluide de refroidissement circule en permanence dans la branche qui contient le radiateur de chauffage, le chauffage de l'habitacle étant alors obtenu par mixage d'un flux d'air froid et d'un flux d'air chaud qui a balayé le radiateur de chauffage. Il est connu aussi de prévoir une vanne séparée sur le radiateur de chauffage pour régler le débit de fluide de refroidissement qui le traverse.

Les vannes généralement utilisées pour cette application sont du type à boisseau. Mais outre le fait que leur encombrement est important, elles ne permettent pas de garantir une fiabilité acceptable durant toute la vie du véhicule. On connaît notamment une vanne selon le préambule de la revendication 1 du document FR 2 827 359.

Ainsi, les dispositifs de refroidissement connus nécessitent des moyens complexes pour réaliser la distribution du fluide de refroidissement entre les trois branches précitées, en fonction des conditions de fonctionnement du moteur et des conditions de confort souhaitées par le ou les occupants du véhicule.

D'autre part, ces dispositifs ne permettent pas d'obtenir lors des démarrages à froid du moteur une montée en température rapide de la matière entourant les cylindres qui aurait pour avantage d'assurer un meilleur mélange des gaz avec le carburant pour obtenir un taux d'émission des gaz brûlés réduit avant que le pot catalytique ne soit efficace.

Lors du démarrage à froid du moteur les dispositifs connus opèrent une réduction du débit du fluide de refroidissement, cette réduction de débit étant contrôlée par des thermostats. Mais cette réduction de débit n'est pas suffisante pour permettre une montée en température rapide du moteur.

L'un des buts de l'invention est de procurer une vanne permettant de bloquer le débit pendant la montée en température du moteur jusqu'à un certain niveau de régime moteur et donc de pression de la pompe à eau pour accélérer la montée en température de la matière autour des cylindres du moteur afin de garantir un meilleur mélange et moins d'émissions d'hydrocarbures et de monoxyde de carbone avant que le pot catalytique ne soit efficace et une consommation moindre de carburant.

Un autre but de l'invention est de procurer une vanne permettant de gérer de façon indépendante les débits du fluide de refroidissement dans les différentes branches du circuit de refroidissement du moteur et d'assurer un débit nul dans les différentes branches du dispositif de refroidissement, ne nécessitant pas l'usage d'un moteur supplémentaire autre que celui assurant la rotation de l'organe de réglage dans le corps de vanne, pour permettre une montée rapide en température lors des démarrages à froid du moteur.

L'invention vise aussi à procurer une telle vanne qui permet d'optimiser et d'améliorer les différentes fonctions, notamment lors de la montée en température du moteur thermique, lorsqu'un chauffage de l'habitacle est souhaité, et aussi en cas de surchauffe du moteur.

La vanne selon l'invention comprend un corps muni d'une entrée de fluide et d'au moins deux sorties de fluide, un organe de réglage propre à pivoter autour d'un axe de rotation et à prendre différentes positions angulaires à l'intérieur d'un logement cylindrique du corps de vanne pour contrôler la distribution du fluide au travers des sorties, et

des moyens d'obturation pour empêcher toute circulation du fluide dans la vanne dans une position de débit nul (encore appelée position"0 débit"), ce qui permet une montée en température du moteur sans risque de détérioration de celui-ci lors d'un démarrage à froid.

Selon un premier mode de réalisation, lesdits moyens d'obturation sont prévus aptes à fermer lesdites sorties de fluide de la vanne. Cependant d'autres moyens d'obturation sont possibles notamment par fermeture de l'entrée de fluide de la vanne.

La vanne comprend, par exemple, un segment d'étanchéité entourant la partie cylindrique de l'organe de réglage et coopérant avec lui par des orifices communs pour répartir sélectivement le débit de fluide dans l'ensemble des sorties de fluide. Dans un tel mode, les moyens d'obturation permettant d'obtenir la position de débit nul pourront être constitués au moins en partie par le segment d'étanchéité.

Selon l'invention, la vanne comprend également des moyens pour limiter la pression exercée par le fluide dans le corps de vanne lorsque l'organe de réglage est dans la position "0 débit" et permettre de diminuer le couple d'entraînement de l'organe de réglage lorsqu'il est actionné pour quitter la position correspondant au débit nul de la vanne pour répartir le fluide dans les tubulures de sortie, ledits moyens pour limiter la pression coopérant avec une desdites sorties de fluide par l'intermédiaire d'une cavité mettant en communication l'intérieur du corps de vanne avec l'intérieur d'une tubule de sortie de ladite sortie. Pour cela, une des sorties de fluide est, par exemple, reliée à une tubulure de sortie de fluide coopérant avec un limiteur de pression pour interdire tout débit de fluide dans ladite tubulure de sortie lorsque, les sorties restantes de la vanne étant fermées par le segment d'étanchéité, la pression à l'intérieur du corps de la vanne est inférieure à une valeur de seuil déterminée et pour autoriser un débit de fluide dans la dite tubulure de sortie de fluide au travers du segment d'étanchéité lorsque, les sorties de fluide restantes étant fermées par le segment d'étanchéité, la pression du fluide à l'intérieur du corps de vanne excède une valeur de seuil prédéterminée.

Le limiteur de pression comprend un clapet poussé par un ressort disposé à l'intérieur d'une cavité située à l'extérieur de ladite tubulure de sortie, comportant d'une part, une ouverture d'entrée adjacente à la dite sortie de fluide coopérant avec le limiteur de pression et pouvant être mise en communication avec l'intérieur du corps de vanne par l'intermédiaire d'un orifice du corps de vanne et d'un orifice du segment d'étanchéité et d'autre part, une ouverture de sortie, en communication avec l'intérieur de ladite tubulure de sortie, reliée à la sortie de fluide coopérant avec le limiteur de pression, ledit clapet venant obturer la dite ouverture d'entrée et étant désengagé de ladite ouverture d'entrée lorsque simultanément ladite sortie de fluide est fermée par le segment d'étanchéité, l'ouverture d'entrée adjacente à ladite sortie de fluide est ouverte par le segment d'étanchéité et la pression de fluide à l'intérieur du corps de vanne excède la dite valeur de seuil prédéterminée.

Dans un deuxième mode de réalisation non couvert par les revendications, le limiteur de pression est fixé à l'intérieur de ladite tubulure de sortie de fluide coopérant avec le limiteur de pression. Le limiteur de pression comprend un clapet poussé par un ressort pour fermer ladite tubulure de sortie et permettant au fluide de circuler de l'intérieur du corps de vanne dans ladite tubulure de sortie au travers d'une ouverture du segment d'étanchéité lorsque la pression du fluide à l'intérieur du corps de vanne excède ladite valeur de seuil prédéterminée.

Selon une variante de réalisation du deuxième mode de réalisation, il est adjoint au limiteur de pression un thermostat pour repousser le clapet et son ressort et permettre l'ouverture de ladite tubulure de sortie lorsque la température à l'intérieur du corps de vanne dépasse une valeur de seuil déterminée.

Dans un troisième mode de réalisation lui-aussi non couvert par les revendications, l'organe de réglage comporte un élément de frottement ou de roulement disposé à la périphérie de la paroi de fond ouverte de l'organe de réglage en contact avec un obturateur de l'orifice d'entrée pour obturer l'orifice d'entrée dans une position déterminée de l'organe de réglage autour de son axe de rotation afin d'obtenir un débit nul. Grâce au fait que l'obturateur isole dans la position de débit nul l'intérieur du corps de vanne des variations de pression exercées par la pompe, l'entraînement de l'organe de réglage, pour permettre à la vanne de quitter sa position de débit nul et distribuer le fluide de refroidissement dans les tubulures de sortie, peut être réalisé avec un moteur réducteur de dimensions et puissance réduites.

Dans un mode de réalisation particulier du troisième mode de réalisation, l'obturateur présente la forme d'un cône creux reposant sur une embase en forme de couronne montée coulissante à l'intérieur du corps de vanne et la partie du cône située au voisinage de l'embase est traversée par des ouvertures d'entrée de fluide.

L'embase en forme de couronne possède une surface plane orientée perpendiculairement à l'axe longitudinal XX' du corps de vanne et surmontée d'au moins une rampe. La surface plane est en contact permanent avec au moins un élément de frottement ou de roulement disposé à l'extrémité de l'organe de réglage grâce à un ressort comprimé entre un épaulement de l'embase et le fond du corps de vanne traversé par l'orifice d'entrée.

Selon une autre caractéristique de l'invention, les sorties de fluide débouchent dans le corps de la vanne par des ouvertures de formes et de dimensions choisies, aménagées en des emplacements choisis du corps de la vanne.

De manière préférentielle, les ouvertures des sorties de fluide ont une forme générale circulaire et ont des diamètres différents.

Dans une forme de réalisation préférée de l'invention, le corps de la vanne comprend une paroi cylindrique dans laquelle débouchent les sorties de fluide à des hauteurs axiales et en des positions angulaires choisies par rapport à l'axe de rotation de l'organe de réglage, tandis que l'entrée de fluide débouche dans l'axe du corps de la vanne. L'organe de réglage est réalisé sous la forme d'un cylindre comprenant des ouvertures de passage propres à contrôler les sorties de fluide en fonction de la position angulaire de l'organe de réglage par rapport au corps.

Selon encore une autre caractéristique de l'invention, la vanne de commande comprend des moyens de motorisation propres à entraîner l'organe de réglage pour l'amener dans des positions angulaires choisies par rapport au corps de vanne. Ces moyens de motorisation peuvent comprendre, par exemple, un moteur du type pas à pas ou à courant continu ou sans balais.

Dans une application préférentielle de l'invention, la vanne est spécialement conçue pour être incorporée dans le circuit de refroidissement d'un moteur thermique de véhicule automobile, le circuit étant composé principalement d'un radiateur, d'un aérotherme et d'un circuit de dérivation. A cette fin la vanne comprend d'une part, une entrée de fluide reliée à une arrivée de fluide de refroidissement en provenance du moteur, et d'autre part, une première, une deuxième et une troisième sorties de fluide reliées respectivement à une première branche qui contient le radiateur de refroidissement du moteur, une deuxième branche qui constitue une dérivation du radiateur de refroidissement du moteur, et une troisième branche qui contient un aérotherme pour le chauffage de l'habitacle.

Dans cette application l'organe de réglage est propre à prendre successivement au moins les positions suivantes, lorsqu'il est entraîné en rotation dans un sens donné:
- une position "radiateur", en laquelle la deuxième tubulure de sortie est ouverte;
- une position "radiateur + dérivation", en laquelle la première tubulure de sortie et la deuxième tubulure de sortie sont partiellement ouvertes;
- une position "dérivation", en laquelle la première tubulure de sortie est ouverte;
- une position "débit nul", en laquelle aucune tubulure de sortie n'est ouverte;
- une position "aérotherme", en laquelle la troisième tubulure de sortie est ouverte;
- une position "aérotherme + dérivation", en laquelle la première tubulure de sortie et la troisième tubulure de sortie sont partiellement ouvertes;
- une position "radiateur + dérivation + aérotherme", en laquelle la première tubulure de sortie, la deuxième tubulure de sortie et la troisième tubulure de sortie sont partiellement ouvertes;
- une position "radiateur + aérotherme", en laquelle la deuxième tubulure de sortie et la troisième tubulure de sortie sont partiellement ouvertes.

Les positions indiquées précédemment correspondent à celles que l'on retrouve en séquence, lorsque l'on fait tourner l'organe de réglage dans le corps de vanne, dans un sens donné.

Cependant il doit être compris que l'organe de réglage peut être amené directement dans l'une des positions précédentes en fonction d'un mode particulier souhaité.

Avantageusement, l'organe de réglage est propre à prendre, en outre, une position "sécurité" qui correspond soit à la position "radiateur", en laquelle la deuxième sortie est ouverte, soit à la position "radiateur + aérotherme", en laquelle la deuxième sortie et la troisième sortie sont ouvertes.

Ces positions de sécurité favorisent le refroidissement du moteur en permettant de dissiper la chaleur du moteur, soit au travers du radiateur seul, soit au travers du radiateur et de l'aérotherme.

Dans une forme préférée de réalisation de l'invention, le circuit de refroidissement comprend une pompe de circulation mécanique entraînée par le moteur et/ou une pompe de circulation électrique susceptible d'être actionnée par des moyens de commande.

Dans la description qui suit, faite seulement à titre d'exemple, on se réfère aux dessins annexés, sur lesquels:
- la Figure 1 est une vue en perspective éclatée d'une vanne de commande selon un premier mode de réalisation de l'invention;
- les Figures 2A et 2B sont deux vues en perspective du segment d'étanchéité de la vanne représentée à la Figure 1;
- la Figure 3 est un schéma d'un circuit de refroidissement d'un moteur thermique de véhicule automobile, équipé d'une vanne de commande selon l'invention;
- les Figures 4 à 7 sont des vues en coupe d'un premier mode de réalisation d'une sortie de vanne selon l'invention équipée d'un limiteur de pression;
- les figures 8 et 9 sont des vues en coupe d'un deuxième mode de réalisation non couvert par les revendications d'une sortie de vanne équipée d'un limiteur de pression; et
- les figures 10 à 14 un troisième mode de réalisation non couvert par les revendications d'une vanne de commande comportant un obturateur de la tubulure d'entrée.

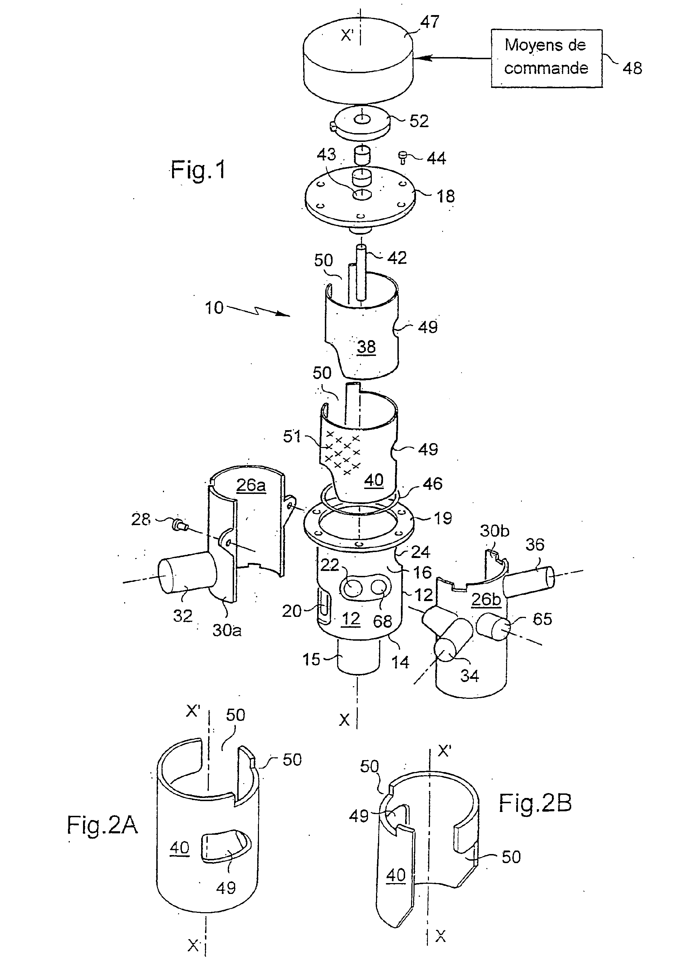

On se réfère d'abord à la Figure 1 qui montre une vanne de commande 10 selon une première forme de réalisation de l'invention. Cette vanne de commande comprend un premier corps cylindrique 12 limité par une paroi de fond 14 et une paroi cylindrique latérale 16 d'axe longitudinal XX'. La paroi de fond 14 comporte un orifice alimenté par une tubulure d'entrée de fluide 15. Le corps cylindrique 12 est fermé à son extrémité opposée à la paroi de fond 14 par un couvercle 18 en appui sur une collerette 19 en saillie à cette extrémité sur le corps cylindrique 12. La paroi cylindrique latérale 16 est traversée par des orifices de sortie, par exemple au moins trois orifices de sortie 20, 22, 24, disposés à des hauteurs axiales et en des positions angulaires choisies par rapport à l'axe de rotation XX'.

Pour des commodités de réalisation le corps cylindrique 12 est enserré à l'intérieur d'un deuxième corps cylindrique 26 partagé en deux parties 26a et 26b, les deux parties étant fixées l'une à l'autre par des vis de serrage 28. Il est à noter cependant que le corps 26 peut aussi être réalisé en une seule partie. Sur les parois latérales 30a, 30b du deuxième corps cylindrique 26 débouchent trois tubulures 32, 34, 36 qui sont placées en regard des orifices de sortie 20, 22 et 24. Dans la représentation de la figure 1, les tubulures 32 et 36 sont diamétralement opposées, tandis que la tubulure 34 forme un angle de 90 degrés par rapport à l'axe commun des tubulures 32 et 36. Cependant des modes de réalisations comportant des angles différents sont aussi possibles. Par ailleurs, les tubulures 32, 34 et 36 ont des diamètres successivement décroissants mais d'autres configurations sont également possibles dépendant des applications envisagées.

A l'intérieur du corps de vanne 16 est logé un organe de réglage 38, encore appelé organe tournant, qui est réalisé sous la forme d'un cylindre creux ouvert à ses deux extrémités et dont la paroi latérale est rattachée à l'axe de rotation 42 par des nervures non représentées. L'organe de réglage 38 est recouvert d'un segment d'étanchéité 40 réalisé en une matière synthétique souple dont le diamètre extérieur correspond sensiblement au diamètre interne du corps de vanne. L'organe de réglage 38 se prolonge par une tige 42 dirigée suivant l'axe XX'. Cette tige 42 passe au travers d'une ouverture centrale 43 que comporte le couvercle 18. Le couvercle 18 est fixé sur la collerette 19 du corps de vanne par l'intermédiaire de vis de fixation 44,ou éventuellement soudé avec interposition d'un joint d'étanchéité 46. L'organe de réglage 38 est propre à être entraîné en rotation autour de l'axe XX' par des moyens de motorisation 47 commandés par des moyens de commande 48. Les moyens de motorisation 47 peuvent être constitués, par exemple, par un moteur de type pas à pas susceptible d'amener l'organe de réglage 38 dans une multiplicité de positions différentes, soit par incréments successifs, soit de manière continue.

Les parois latérales de l'organe de réglage 38 et du segment d'étanchéité 40 sont traversées par des ouvertures de passage de fluide communes 49, 50 permettant de distribuer le fluide entrant par la paroi de fond au travers des tubulures de sortie 32, 34 et 36. Ces ouvertures sont montrées de façon plus apparente sur les figures 2a et 2b. D'autre part, la surface externe du segment d'étanchéité est striée par des stries 51 pour diminuer le frottement du segment d'étanchéité 40 sur la paroi interne du corps de vanne 12.

De la sorte, l'organe de réglage 38 permet de contrôler les sorties de fluide 32, 34, et 36 avec une loi définie en fonction de la forme donnée aux ouvertures et de la position angulaire de l'organe de réglage 38 dans le corps de vanne.

Un ressort de rappel 52 en spirale, fixé à la tige, permet de ramener l'organe de réglage dans une position initiale lorsque les moyens de motorisation 47 ne sont pas alimentés.

Suivant un autre mode de réalisation non représenté, le corps cylindrique 12 et les tubulures de sorties 32, 34 et 36 peuvent ne former qu'une seule pièce obtenue par moulage, les tubulures de sortie 32, 34, et 36 apparaissant en saillie à l'extérieur du corps cylindrique 12. Ce mode de réalisation ne nécessite plus l'utilisation d'un deuxième corps cylindrique 26 en deux parties mais complique la réalisation du moule de fonderie.

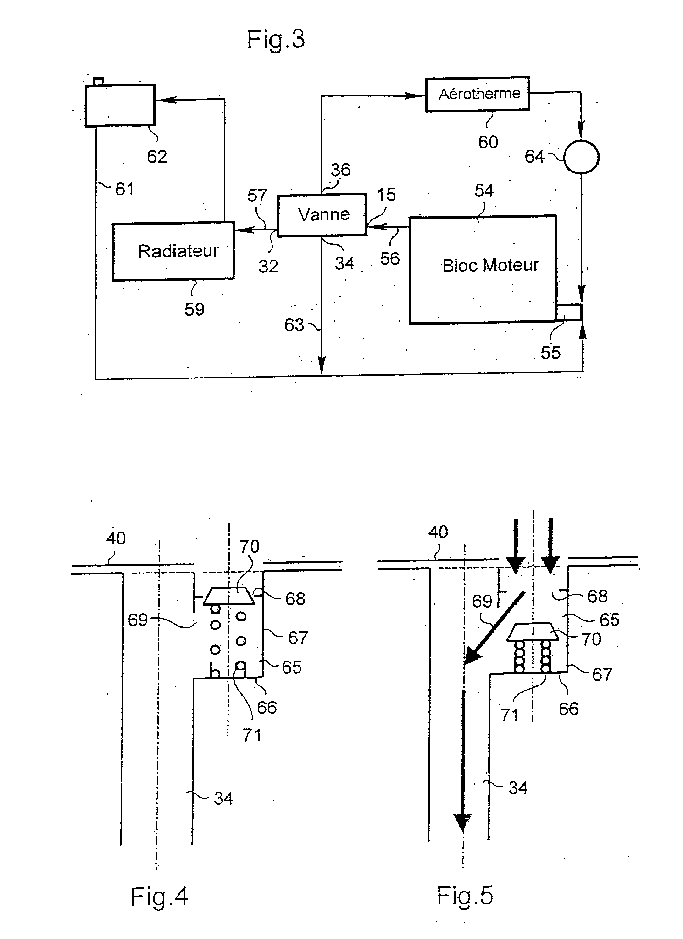

Dans l'exemple de la figure 3 qui représente schématiquement le montage d'une vanne de commande dans le circuit de refroidissement d'un moteur thermique 54 de véhicule automobile, une vanne de commande 10 selon l'invention assure la distribution du fluide de refroidissement qui circule sous l'action d'une pompe 55. Le circuit est organisé en trois branches : une branche "radiateur" 57, une branche "aérotherme" 58 et une branche "dérivation" 63. Le fluide, qui est typiquement de l'eau additionnée d' antigel, est chauffé par le moteur 54 et quitte ce dernier par une sortie 56 qui est reliée à la tubulure d'entrée de fluide 15 de la vanne 10. La vanne 10 alimente respectivement les branches "radiateur" 57 et "aérotherme" 58 par des conduits reliant respectivement les tubulures de sortie 32 et 36 de la vanne 10 à un radiateur de refroidissement 59 et à un aérotherme 60 servant au chauffage de l'habitacle du véhicule. Après avoir traversé le radiateur de refroidissement 59 le fluide retourne à la pompe 55 par le conduit de retour 61 via un vase d'expansion 62. La branche "dérivation" 63 relie directement par un conduit la tubulure de sortie 34 de la vanne à la pompe 55. Le fluide sortant de l'aérotherme 58 est transmis à la pompe 56 via éventuellement une pompe électrique 64.

Si l'organe de réglage 38 est entraîné en rotation dans un sens donné par rapport au corps de la vanne, cet organe peut prendre successivement les positions suivantes:
1- position "radiateur" P9 ou P10, en laquelle la deuxième tubulure de sortie 32 est ouverte;
2- position "radiateur + dérivation" P2 ou P3, en laquelle la première tubulure de sortie 34 et la deuxième tubulure de sortie 32 sont partiellement ouvertes;
3- position "dérivation" P1, en laquelle la première tubulure de sortie 34 est ouverte;
4- position P0, en laquelle aucune tubulure de sortie n'est ouverte. Dans cette position dite de "débit nul", le débit moteur maximum toléré dans le moteur est de l'ordre de quelques litres par heure.
5- position "aérotherme" P5' ou P8, en laquelle la troisième tubulure de sortie 36 est ouverte;
6- position "aérotherme + dérivation" P5, en laquelle la première tubulure de sortie 34 et la troisième tubulure de sortie 36 sont partiellement ouvertes;
7- position "radiateur + dérivation + aérotherme" P6 ou P7, en laquelle la première tubulure de sortie 32, la deuxième tubulure de sortie 34 et la troisième tubulure de sortie sont partiellement ouvertes;
8- position " radiateur + aérotherme" P4, en laquelle la deuxième tubulure de sortie 32 et la troisième tubulure de sortie 36 sont partiellement ouvertes.

Selon un premier mode de mise en oeuvre de l'invention le débit nul de la vanne 10 est obtenu par blocage de toutes les sorties, par l'intermédiaire du segment d'étanchéité. Un limiteur de pression mécanique coopère comme illustré aux figures 4 à 9 avec la tubulure de sortie 34 reliant la vanne 10 à la branche "dérivation" 63, ce qui permet d'arrêter le débit à travers le moteur 54. Cette stratégie de "débit nul" peut être interrompue à tout moment ponctuellement ou définitivement, si la charge et/ou le régime du moteur 54 sont trop importants et donc si le moteur 54 nécessite d'être refroidi par exemple pour éviter un point chaud ou ébullition locale dans le moteur. Le débit circule alors dans le moteur et dans la branche "dérivation" uniquement de façon à limiter la quantité de fluide de refroidissement à chauffer. Le limiteur de pression permet également d'éviter une trop forte montée en pression de la pompe 55 qui autrement créerait un couple trop important pour entraîner en rotation l'organe 38.

Dans l'exemple des figures 4 à 7, le limiteur de pression est monté à l'intérieur d'une cavité 65 mettant en communication l'intérieur du corps de vanne avec l'intérieur de la tubulure de sortie 34. La cavité 65 comporte une paroi de fond 66, une paroi latérale 67 et une ouverture d'entrée 68 opposée à la paroi de fond 66. L'ouverture 68 est en communication avec l'intérieur du corps de vanne par l'intermédiaire du segment d'étanchéité 40. La paroi latérale 67 est traversée par une ouverture 69 mettant en communication l'intérieur de la cavité 65 avec l'intérieur de la tubulure de sortie 34. L'ouverture 68 est fermée par un clapet 70 poussé par un ressort 71 en appui sur la paroi de fond 66.

La figure 4 correspond à un bas régime du moteur pour lequel le débit de fluide au travers du bloc moteur 54 est nul et la figure 5 correspond à régime moteur élevé et un débit de fluide dans le bloc moteur 54 non nul. Dans ces deux configurations le segment d'étanchéité 40 obture totalement l'entrée de la tubulure de sortie 34 et présente par contre une ouverture qui est positionnée en regard de l'ouverture 68 de la cavité 65. A bas régime du moteur, ce qui correspond à la représentation de la figure 4, la pression de fluide exercée à l'intérieur du corps de vanne par la pompe 55 est insuffisante pour désengager le clapet 70 de l'ouverture 68 et aucun fluide ne circule dans la tubulure de sortie 34. A régime du moteur élevé, ce qui correspond à la représentation de la figure 5, la pression de fluide exercée à l'intérieur du corps de vanne par la pompe 55 est suffisante pour désengager le clapet 70 de l'ouverture 68 et permettre au fluide de circuler de l'intérieur du corps de vanne dans la tubulure de sortie 34 au travers de l'ouverture 68.

Dans la configuration de la figure 4 le segment 40 coupe le débit dans les branches radiateur 57 et aérotherme 58. Le débit de la branche "dérivation" 63 est coupé par le limiteur de pression taré par le ressort 71 en appui sur la paroi de fond 66. Toutes les branches étant fermées, il n'y a pas de débit dans le moteur.

Selon la configuration de la figure 5, lorsque le régime moteur augmente, la pompe 55 crée une différence de pression plus importante qui vient pousser sur le ressort 71 et ouvrir le limiteur de pression. Ainsi, le débit commence à circuler dans la branche "dérivation" 63 et dans le bloc moteur 54 garantissant sa sécurité thermique. Il est à remarquer qu'à ce stade l'ouverture de la branche "dérivation" 63 ne nécessite pas la rotation du segment 40. De plus le fait de limiter la pression permet d'éviter que la pression ne monte trop dans le circuit, ce qui évite d'éventuels problèmes de cavitation ou d'autres types d'endommagements de la pompe 56 et des composants du circuit de refroidissement.

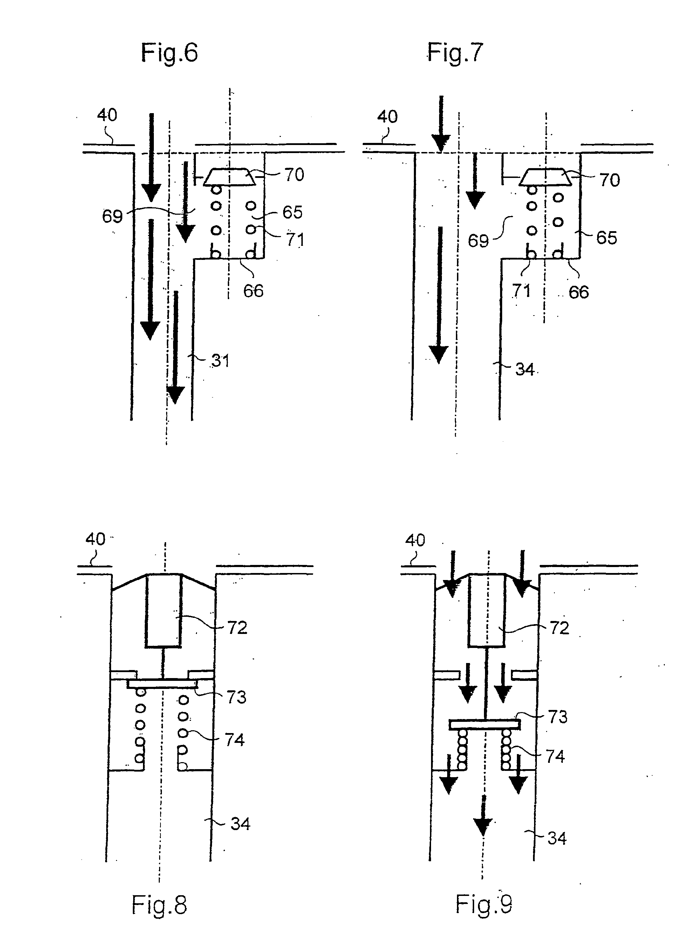

Lorsque la phase "démarrage à froid" s'achève, il n'est plus nécessaire d'avoir le débit nul dans le moteur et la " dérivation" (figures 6 et 7) est ouverte. Les configurations des figures 6 et 7 correspondent à des positions de la vanne permettant de refroidir le moteur par une circulation du fluide réfrigérant au travers de la branche "dérivation" 63 pour un fonctionnement du moteur à faible régime. Pour ce mode de fonctionnement, le segment d'étanchéité 40 présente une ouverture qui est positionnée en face de la tubulure de sortie 34 et/ou en face de l'ouverture 68 de la cavité 65.

Dans l'exemple des figures 8 et 9 non couvert par les revendications, le limiteur de pression est intégré, avec un thermostat 72 sous la forme d'une capsule de cire, piloté ou non par une résistance électrique interne dans la cire, à l'intérieur de la tubulure de sortie 34. Le limiteur de pression se compose d'un clapet 73 venant obturer (figure 8) la tubulure de sortie 34 sous la pression d'un ressort 74. Lorsque le régime du moteur est faible le clapet 73 est en position fermée et obture la tubulure de sortie 34. Lorsque le régime moteur est élevé, la pression du fluide à l'intérieur du corps de vanne 12 est suffisante pour comprimer le ressort 74 et placer le clapet 73 en position ouverte, laissant le fluide pénétrer à l'intérieur de la tubulure de sortie 34. Egalement lorsque le moteur est chaud, le thermostat 72 repousse le clapet 73 en comprimant le ressort 74 laissant alors le fluide circuler de l'intérieur du corps de vanne dans la tubulure de sortie.

Dans l'exemple de réalisation des figures 8 et 9, un débit maximum de 10 1/h est toléré dans la branche "dérivation" 63, en position thermostat fermé, figure 8, pour assurer l'ouverture du thermostat 72 et obtenir un débit de fuite maximum de 10 1/h dans le bloc moteur 54 à faible régime. Cela permet lorsque le véhicule roule tout le temps à faible régime moteur (type urbain) alors qu'il est impossible d'ouvrir la branche "dérivation" 63 par la simple pression exercée sur le clapet 73, d' homogénéiser, grâce à l'ouverture du thermostat, la température dans le moteur 54 et d'éviter les points chauds en envoyant le liquide de refroidissement dans le moteur 54 via la branche "dérivation". Ce cas résout aussi le problème d'échauffement rencontré en été à faible régime moteur quand il n'y a pas de débit dans l'aérotherme.

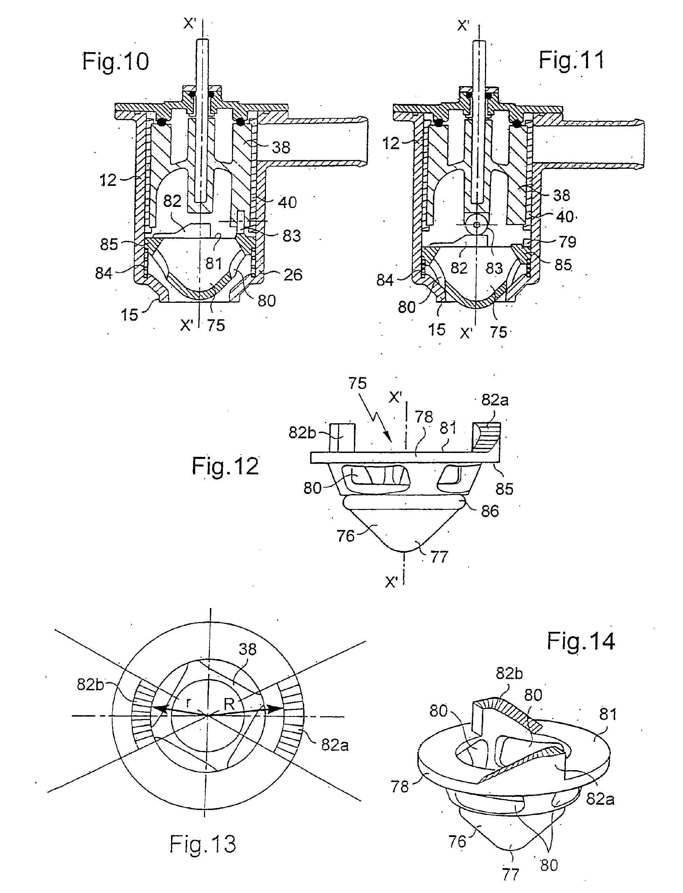

Selon le deuxième mode de mise en oeuvre représenté aux figures 10 à 14 et non couvert par les revendications, où les éléments homologues à ceux de la figure 1 portent les mêmes références, le débit nul de la vanne 10 est obtenu par blocage de l'orifice d'entrée 15 par un obturateur 75 actionné par l'organe de réglage 38. L'obturateur 75 se présente sous la forme d'un cône creux 76 arrondi à son sommet 77, possédant une embase 78 en forme de couronne montée coulissante à l'intérieur du corps de vanne le long d'une glissière 79 parallèle à l'axe XX'. La partie du cône située au voisinage de l'embase 78 est traversée par des ouvertures d'entrée de fluide 80.

En position bloquée, la partie du cône 76 comprise entre les ouvertures d'entrée de fluide 80 et son sommet 77 est en contact avec l'orifice d'entrée 15 avec laquelle elle coopère pour empêcher le fluide de pénétrer à l'intérieur du corps de vanne par l'orifice d'entrée 15.

En position débloquée, le fluide parcourt l'espace compris entre d'une part, la partie du cône 76 jouxtant son sommet 77 et d'autre part, l'orifice d'entrée 15 pour pénétrer dans le corps de vanne au travers des ouvertures de fluide 80.

Pour assurer le passage de l'obturateur 75 de la position bloquée à la position débloquée l'embase 78 en forme de couronne possède une surface plane 81 en regard avec l'organe de réglage 38 orientée perpendiculairement à l'axe longitudinal XX' du corps de vanne. La surface plane 81 est surmontée d'au moins une rampe 82 de profil déterminé. La surface plane 81 est placée en contact permanent avec au moins un élément de frottement ou de roulement 76 disposé à l'extrémité de l'organe de réglage 38 grâce à un ressort 84 comprimé entre un épaulement 85 de l'embase 78 et le fond du corps de vanne traversé par l'orifice d'entrée 15.

Pour parvenir à la position "0 débit", l'actionneur positionne l'organe de réglage 38 dans une position angulaire définie en dehors de la plage angulaire de fonctionnement de la vanne. Pour parvenir à cette position, chaque élément de frottement ou de roulement 83 parcourt une rampe 82 ce qui a pour effet de pousser l'obturateur 75 contre l'orifice d'entrée 15. Dans ce déplacement le ressort 84 est comprimé, ce qui maintient en contact chaque élément de frottement ou de roulement 83 contre une rampe 82 et la partie 76 en forme de cône de l'obturateur 75 est engagée par son sommet 77 dans l'orifice d'entrée 15 jusqu'à obtenir son obturation totale.

Pour atteindre les autres positions les éléments de frottement ou de roulement 83 viennent en contact avec la partie plane 81 de la couronne 78 après avoir parcouru les parties inclinées des rampes 82 correspondantes, ce qui a pour effet de séparer l'obturateur 75 de l'orifice d'entrée 15 et de laisser le fluide pénétrer dans le corps de vanne au travers des orifices 80.

De préférence l'obturateur 75 pourra comporter deux rampes 82a, 82b diamétralement opposées l'une à l'autre sur des rayons R et r différents comme le montrent les figures 13 et 14, afin d'équilibrer les efforts, et ne pas avoir de coincement. Il pourra aussi comporter un joint 86 qui assure l'étanchéité entre l'obturateur 75 et le corps de vanne 12.

Dans ce mode de réalisation, les séquences de fonctionnement de la vanne se font sur une zone définie par exemple de 305°, la portion angulaire restante sert à réaliser le changement d'altitude par l'intermédiaire des rampes 82. L'effort pour revenir au séquencement fonctionnel de la vanne se trouve alors d'autant plus diminué que la pression exercée par la pompe à eau sur l'obturateur 75 aide à son ouverture.

La réalisation d'une vanne selon l'invention n'est bien sûr pas limitée à celle d'une vanne à trois voies de la forme décrite précédemment. Elle n'est pas non plus limitée à une application pour circuit de refroidissement de moteur thermique de véhicule automobile et peut servir à d'autres usages dans des domaines différents.

## Revendications

1. Vanne de commande pour un circuit de circulation de fluide, comprenant un corps (12, 26a, 26b) qui est muni d'une entrée de fluide (15) et d'au moins deux sorties de fluide (20, 22, 24; 32, 34, 36) et qui délimite un logement cylindrique pour un organe de réglage (38) propre à pivoter autour d'un axe de rotation (XX') et à prendre différentes positions angulaires pour contrôler la distribution du fluide au travers des sorties, ladite vanne comprenant en outre des moyens d'obturation (40 ; 75) pour empêcher toute circulation du fluide dans la vanne dans une position de débit nul ("0 débit")
**caractérisée en ce que** la vanne comprend des moyens pour limiter la pression dans le corps de vanne lorsque l'organe de réglage (38) est dans une position de débit nul interdisant tout débit dans les tubulures de sortie et diminuer le couple d'entraînement de l'organe de réglage lorsque l'organe de réglage (38) est actionné pour sortir de la position correspondant au débit nul de la vanne, et **en ce que** lesdits moyens pour limiter la pression coopèrent avec une desdites sorties de fluide (20, 22, 24; 32, 34, 36) par l'intermédiaire d'une cavité (65) mettant en communication l'intérieur du corps de vanne avec l'intérieur d'une tubulure de sortie de ladite sortie (20, 22, 24; 32, 34, 36).

2. Vanne de commande selon la revendication 1, **caractérisée en ce que** lesdits moyens d'obturation sont prévus aptes à fermer lesdites sorties de fluide.

3. Vanne de commande selon l'une des revendications 1 ou 2, **caractérisée en ce que** la vanne comprend un segment d'étanchéité (40) entourant la partie cylindrique de l'organe de réglage (38) et coopérant avec l'organe de réglage (38) par des orifices communs (49, 50) pour répartir sélectivement le débit de fluide dans l'ensemble des sorties de fluide (20, 22, 24; 32, 34, 36), et **en ce que** l'une au moins des sorties de fluide est reliée à une tubulure de sortie de fluide (34) coopérant avec un limiteur de pression (65, 70, 71; 73, 74) pour interdire tout débit de fluide dans ladite tubulure de sortie (34) lorsque, les sorties restantes (20, 24; 32, 36) de la vanne (10) étant fermées par le segment d'étanchéité (40), la pression à l'intérieur du corps de la vanne (12) est inférieure à une valeur de seuil déterminée et pour autoriser un débit de fluide dans la dite tubulure de sortie de fluide (34) au travers du segment d'étanchéité lorsque, les sorties de fluide restantes étant fermées par le segment d'étanchéité (40), la pression du fluide à l'intérieur du corps de vanne excède ladite valeur de seuil déterminée.

4. Vanne de commande selon la revendication précédente, **caractérisée en ce que** le limiteur de pression (65) comprend un clapet (70) poussé par un ressort (71) disposé à l'intérieur d'une cavité (65) comportant d'une part, une ouverture d'entrée (68) adjacente à la dite sortie de fluide coopérant avec le limiteur de pression (65) et pouvant être mise en communication avec l'intérieur du corps de vanne (12) par l'intermédiaire d'un orifice du corps de vanne et d'un orifice du segment d'étanchéité (40) et d'autre part, une ouverture de sortie (69), en communication avec l'intérieur de ladite tubulure de sortie, reliée à la sortie de fluide coopérant avec le limiteur de pression (12), ledit clapet (70) venant obturer la dite ouverture d'entrée (68) et étant désengagé de ladite ouverture d'entrée (68) lorsque simultanément ladite sortie de fluide est fermée par le segment d'étanchéité (40), l'ouverture d'entrée adjacente à ladite sortie de fluide est ouverte par le segment d'étanchéité (40) et la pression de fluide à l'intérieur du corps de vanne (12) excède la dite valeur de seuil prédéterminée.

5. Vanne de commande selon l'une des revendications précédentes, **caractérisée en ce que** le corps de vanne (12) comprend une paroi de fond (14) dans laquelle débouche l'entrée de fluide (15) et une paroi latérale cylindrique (16) dans laquelle débouchent les sorties de fluide (20, 22, 24) à des hauteurs axiales et en des positions angulaires choisies par rapport à l'axe de rotation (XX'), et **en ce que** l'organe de réglage (38) est un corps cylindrique creux comprenant un fond ouvert dans lequel débouche l'orifice d'entrée de fluide et une paroi latérale cylindrique comportant des orifices de sortie de fluide (49, 50) propres à contrôler les sorties de fluide avec une loi définie en fonction de la position angulaire de l'organe de réglage (38) tournant dans le corps de vanne (12).

6. Vanne de commande selon la revendication précédente, **caractérisée en ce que** la vanne comprend un segment d'étanchéité (40) entourant la partie cylindrique de l'organe de réglage (38) et coopérant avec l'organe de réglage (38) par des orifices communs (49, 50) pour répartir sélectivement le débit de fluide dans l'ensemble des sorties de fluide (20, 22, 24; 32, 34, 36), la paroi cylindrique de l'organe de réglage (38) étant recouverte par le segment d'étanchéité (40), les ouvertures de passage de fluide communes (49, 50), prévues de même forme et dimensions, étant juxtaposées les unes aux autres, pour permettre de distribuer dans les orifices de sortie du corps de vanne le fluide entrant dans la paroi de fond du corps de vanne (12).

7. Vanne de commande selon l'une des revendications 5 et 6, **caractérisée en ce que** le corps de vanne (12) est enserré à l'intérieur d'un deuxième corps de vanne (26) en deux parties (26a, 26b) comportant des tubulures de sortie (32, 34, 36), les entrées des tubulures de sortie étant disposées en vis à vis des orifices de sortie du premier corps de vanne (12).

8. Vanne de commande selon l'une des revendications précédentes, **caractérisée en ce qu'**elle comprend des moyens de motorisation (47) propres à entraîner l'organe de réglage (38) pour l'amener dans des positions angulaires choisies par rapport au corps de vanne (12).

9. Circuit de refroidissement d'un moteur thermique de véhicule automobile qui est parcouru par un fluide de refroidissement sous l'action d'une pompe de circulation (56), **caractérisé en ce qu'**il comprend une vanne de commande selon l'une des revendications précédentes comprenant d'une part, une entrée de fluide (15) reliée à une arrivée de fluide de refroidissement en provenance du moteur (54), et d'autre part, une première (32), deuxième (34) et troisième (36) sorties de fluide reliées respectivement à une première branche (57) qui contient le radiateur de refroidissement (59) du moteur (54), une deuxième branche (63) qui constitue une dérivation du radiateur de refroidissement du moteur (54), et une troisième branche (63) qui contient un aérotherme (60) pour le chauffage de l'habitacle.

10. Circuit de refroidissement selon la revendication précédente, **caractérisé en ce que** l'organe de réglage est propre à prendre successivement au moins les positions suivantes, lorsqu'il est entraîné en rotation dans un sens donné:
- une position "radiateur", en laquelle la deuxième tubulure de sortie est ouverte;
- une position "radiateur + dérivation", en laquelle la première tubulure de sortie et la deuxième tubulure de sortie sont partiellement ouvertes;
- une position "dérivation", en laquelle la première tubulure de sortie est ouverte;
- une position "débit nul", en laquelle aucune tubulure de sortie n'est ouverte;
- une position "aérotherme", en laquelle la troisième tubulure de sortie est ouverte;
- une position "aérotherme + dérivation", en laquelle la première tubulure de sortie et la troisième tubulure de sortie sont partiellement ouvertes;
- une position "radiateur + dérivation + aérotherme", en laquelle la première tubulure de sortie, la deuxième tubulure de sortie et la troisième tubulure de sortie sont partiellement ouvertes;
- une position "radiateur + aérotherme", en laquelle la deuxième tubulure de sortie et la troisième tubulure de sortie sont partiellement ouvertes.

## Claims

1. Control valve for a fluid flow circuit, comprising a body (12, 26a, 26b) which is provided with a fluid inlet (15) and at least two fluid outlets (20, 22, 24; 32, 34, 36) and which bounds a cylindrical recess for an adjusting member (38) suitable for pivoting about an axis of rotation (XX') and for assuming various angular positions to control the distribution of the fluid through the outlets, the said valve further comprising shutoff means (40; 75) to prevent any fluid flow in the valve in a zero flow ("0 flow") position
**characterized in that** the valve comprises means for limiting the pressure in the valve body when the adjusting member (38) is in a zero flow position preventing any flow in the outlet nozzles and reducing the drive torque of the adjusting member when the adjusting member (38) is actuated to exit from the zero flow position of the valve, and **in that** the said means for limiting the pressure cooperate with one of the said fluid outlets (20, 22, 24; 32, 34, 36) via a cavity (65) providing communication between the interior of the valve body and the interior of an outlet nozzle of the said outlet (20, 22, 24; 32, 34, 36).

2. Control valve according to Claim 1, **characterized in that** the said shutoff means are suitable for closing the said fluid outlets.

3. Control valve according to either of Claims 1 and 2, **characterized in that** the valve comprises a sealing ring (40) surrounding the cylindrical part of the adjusting member (38) and cooperating with the adjusting member (38) via common orifices (49, 50) to selectively distribute the fluid flow in all the fluid outlets (20, 22, 24; 32, 34, 36), and **in that** at least one of the fluid outlets is connected to a fluid outlet nozzle (34) cooperating with a pressure limiter (65, 70, 71; 73, 74) to prevent any fluid flow in the said outlet nozzle (34) when, the remaining outlets (20, 24; 32, 36) of the valve (10) being closed by the sealing ring (40), the pressure in the valve body (12) is lower than a predefined threshold value, and to allow a fluid flow in the said fluid outlet nozzle (34) through the sealing ring when, the remaining fluid outlets being closed by the sealing ring (40), the fluid pressure in the valve body exceeds the said predefined threshold value.

4. Control valve according to the preceding claim, **characterized in that** the pressure limiter (65) comprises a disc (70) thrust by a spring (71) placed in a cavity (65) comprising on the one hand, an inlet opening (68) adjacent to the said fluid outlet cooperating with the pressure limiter (65) and being communicable with the interior of the valve body (12) via an orifice of the valve body and an orifice of the sealing ring (40) and on the other hand, an outlet opening (69), communicating with the interior of the said outlet nozzle, connected to the fluid outlet cooperating with the pressure limiter (12), the said disc (70) shutting the said inlet opening (68) and being disengaged from the said inlet opening (68) when, simultaneously, the said fluid outlet is closed by the sealing ring (40), the inlet opening adjacent to the said fluid outlet is opened by the sealing ring (40) and the fluid pressure in the valve body (12) exceeds the said predefined threshold value.

5. Control valve according to one of the preceding claims, **characterized in that** the valve body (12) comprises an end wall (14) in which the fluid inlet (15) terminates and a cylindrical side wall (16) in which the fluid outlets (20, 22, 24) terminate at axial heights and in angular positions selected with regard to the axis of rotation (XX'), and **in that** the adjusting member (38) is a hollow cylindrical body comprising an open end in which the fluid inlet orifice terminates and a cylindrical side wall comprising fluid outlet orifices (49, 50) suitable for controlling the fluid outlets with a law defined as a function of the angular position of the adjusting member (38) rotating in the valve body (12).

6. Control valve according to the preceding claim, **characterized in that** the valve comprises a sealing ring (40) surrounding the cylindrical part of the adjusting member (38) and cooperating with the adjusting member (38) via common orifices (49, 50) to selectively distribute the fluid flow in all the fluid outlets (20, 22, 24; 32, 34, 36), the cylindrical wall of the adjusting member (38) being covered by the sealing ring (40), the common fluid passages (49, 50), having the same shape and dimensions, being juxtaposed to one another, to allow the distribution of the fluid entering the end wall of the valve body (12) into the outlet orifices of the valve body.

7. Control valve according to either of Claims 5 and 6, **characterized in that** the valve body (12) is enclosed in a second valve body (26) in two parts (26a, 26b) comprising outlet nozzles (32, 34, 36), the inlets of the outlet nozzles being placed opposite the outlet orifices of the first valve body (12).

8. Control valve according to one of the preceding claims, **characterized in that** it comprises drive means (47) for driving the adjusting member (38) to bring it into selected angular positions with regard to the valve body (12).

9. Cooling circuit of a motor vehicle internal combustion engine which is traversed by a cooling fluid under the action of a circulating pump (56), **characterized in that** it comprises a control valve according to one of the preceding claims comprising on the one hand, a fluid inlet (15) connected to an intake of cooling fluid from the engine (54), and on the other hand, a first (32), second (34) and third (36) fluid outlets connected respectively to a first branch (57) which contains the cooling radiator (59) of the engine (54), a second branch (63) which constitutes a bypass of the cooling radiator of the engine (54), and a third branch (63) which contains a unit heater (60) for heating the passenger compartment.

10. Cooling circuit according to the preceding claim, **characterized in that** the adjusting member is suitable for successively assuming at least the following positions, when it is rotated in a given direction:
- a "radiator" position, in which the second outlet nozzle is open;
- a "radiator + bypass" position, in which the first outlet nozzle and the second outlet nozzle are partially open;
- a "bypass" position, in which the first outlet nozzle is open;
- a "zero flow" position, in which no outlet nozzle is open;
- a "unit heater" position, in which the third outlet nozzle is open;
- a "unit heater + bypass" position, in which the first outlet nozzle and the third outlet nozzle are partially open;
- a "radiator + bypass + unit heater" position, in which the first outlet nozzle, the second outlet nozzle and the third outlet nozzle are partially open;
- a "radiator + unit heater" position, in which the second outlet nozzle and the third outlet nozzle are partially open.

## Patentansprüche

1. Regelventil für einen Fluidumwälzkreislauf, das einen Körper (12, 26a, 26b) enthält, der mit einem Fluideingang (15) und mit mindestens zwei Fluidausgängen (20, 22, 24; 32, 34, 36) versehen ist und eine zylindrische Aufnahme für ein Einstellglied (38) begrenzt, das um eine Drehachse (XX') schwenken und verschiedene Winkelstellungen einnehmen kann, um die Ausgabe des Fluids über die Ausgänge zu steuern, wobei das Ventil außerdem Verschlusseinrichtungen (40; 75) enthält, um jede Strömung des Fluids im Ventil in einer Nulldurchsatzstellung ("0 Durchsatz") zu verhindern,
**dadurch gekennzeichnet, dass** das Ventil Einrichtungen enthält, um den Druck im Ventilkörper zu begrenzen, wenn das Einstellglied (38) in einer Nulldurchsatzstellung ist, die jeden Durchsatz in den Ausgangsrohren verhindert, und das Antriebsmoment des Einstellglieds zu verringern, wenn das Einstellglied (38) betätigt wird, um die dem Nulldurchsatz des Ventils entsprechende Stellung zu verlassen, und dass die Einrichtungen zur Begrenzung des Drucks mit einem der Fluidausgänge (20, 22, 24; 32, 34, 36) über einen Hohlraum (65) zusammenwirken, der das Innere des Ventilkörpers mit dem Inneren eines Ausgangsrohrs des Ausgangs (20, 22, 24; 32, 34, 36) in Verbindung setzt.

2. Regelventil nach Anspruch 1, **dadurch gekennzeichnet, dass** die Verschlusseinrichtungen geeignet vorgesehen sind, um die Fluidausgänge zu verschließen.

3. Regelventil nach einem der Ansprüche 1 oder 2, **dadurch gekennzeichnet, dass** das Ventil ein Dichtsegment (40) enthält, das den zylindrischen Teil des Einstellglieds (38) umgibt und mit dem Einstellglied (38) über gemeinsame Öffnungen (49, 50) zusammenwirkt, um den Fluiddurchsatz in der Gesamtheit der Fluidausgänge (20, 22, 24; 32, 34, 36) selektiv zu verteilen, und dass mindestens einer der Fluidausgänge mit einem Fluidausgangsrohr (34) verbunden ist, das mit einem Druckbegrenzer (65, 70, 71; 73, 74) zusammenwirkt, um jeden Fluiddurchsatz im Ausgangsrohr (34) zu verhindern, wenn, während die verbleibenden Ausgänge (20, 24; 32, 36) des Ventils (10) durch das Dichtsegment (40) verschlossen werden, der Druck im Inneren des Körpers des Ventils (12) unter einem bestimmten Schwellwert liegt, und um einen Fluiddurchsatz im Fluidausgangsrohr (34) durch das Dichtsegment zu erlauben, wenn, während die verbleibenden Fluidausgänge vom Dichtsegment (40) verschlossen werden, der Druck des Fluids im Inneren des Ventilkörpers den bestimmten Schwellwert überschreitet.

4. Regelventil nach dem vorhergehenden Anspruch, **dadurch gekennzeichnet, dass** der Druckbegrenzer (65) eine von einer Feder (71) gedrückte Klappe (70) enthält, die im Inneren eines Hohlraums (65) angeordnet ist, der einerseits eine an den mit dem Druckbegrenzer (65) zusammenwirkenden Fluidausgang angrenzende Eingangsöffnung (68), die mit dem Inneren des Ventilkörpers (12) über eine Öffnung des Ventilkörpers und eine Öffnung des Dichtsegments (40) in Verbindung gesetzt werden kann, und andererseits eine mit dem Inneren des Ausgangsrohrs in Verbindung stehende Ausgangsöffnung (69) aufweist, die mit dem mit dem Druckbegrenzer (65) zusammenwirkenden Fluidausgang verbunden ist, wobei die Klappe (70) die Eingangsöffnung (68) verschließt und von der Eingangsöffnung (68) entfernt wird, wenn gleichzeitig der Fluidausgang vom Dichtsegment (40) verschlossen wird, die an den Fluidausgang angrenzende Eingangsöffnung vom Dichtsegment (40) geöffnet wird und der Fluiddruck innerhalb des Ventilkörpers (12) den vorbestimmten Wert überschreitet.

5. Regelventil nach einem der vorhergehenden Ansprüche, **dadurch gekennzeichnet, dass** der Ventilkörper (12) eine Bodenwand (14), in die der Fluideingang (15) mündet, und eine zylindrische Seitenwand (16) enthält, in die die Fluidausgänge (20, 22, 24) in gewählten axialen Höhen und Winkelstellungen bezüglich der Drehachse (XX') münden, und dass das Einstellglied (38) ein zylindrischer Hohlkörper ist, der einen offenen Boden, in den die Fluideingangsöffnung mündet, und eine zylindrische Seitenwand enthält, die Fluidausgangsöffnungen (49, 50) aufweist, die die Fluidausgänge mit einem Gesetz steuern können, das abhängig von der Winkelstellung des im Ventilkörper (12) drehenden Einstellglieds (38) definiert wird.

6. Regelventil nach dem vorhergehenden Anspruch, **dadurch gekennzeichnet, dass** das Ventil ein Dichtsegment (40) enthält, das den zylindrischen Teil des Einstellglieds (38) umgibt und mit dem Einstellglied (38) über gemeinsame Öffnungen (49, 50) zusammenwirkt, um den Fluiddurchsatz in der Gesamtheit der Fluidausgänge (20, 22, 24; 32, 34, 36) selektiv zu verteilen, wobei die zylindrische Wand des Einstellglieds (38) vom Dichtsegment (40) bedeckt wird, wobei die gemeinsamen Fluiddurchgangsöffnungen (49, 50), die mit der gleichen Form und Abmessung vorgesehen sind, nebeneinander angeordnet sind, um es zu ermöglichen, in die Ausgangsöffnungen des Ventilkörpers das in die Bodenwand des Ventilkörpers (12) eintretende Fluid zu verteilen.

7. Regelventil nach einem der Ansprüche 5 und 6, **dadurch gekennzeichnet, dass** der Ventilkörper (12) im Inneren eines zweiten Ventilkörpers (26) aus zwei Teilen (26a, 26b) eingespannt ist, die Ausgangsrohre (32, 34, 36) aufweisen, wobei die Eingänge der Ausgangsrohre gegenüber den Ausgangsöffnungen des ersten Ventilkörpers (12) angeordnet sind.

8. Regelventil nach einem der vorhergehenden Ansprüche, **dadurch gekennzeichnet, dass** es Antriebseinrichtungen (47) enthält, die das Einstellglied (38) antreiben können, um es in gewählte Winkelstellungen bezüglich des Ventilkörpers (12) zu bringen.

9. Kühlkreislauf eines Verbrennungsmotors eines Kraftfahrzeugs, der unter der Wirkung einer Umwälzpumpe (56) von einem Kühlfluid durchströmt wird, **dadurch gekennzeichnet, dass** er ein Regelventil nach einem der vorhergehenden Ansprüche enthält, das einerseits einen Fluideingang (15), der mit einer vom Motor (54) kommenden Kühlfluidzufuhr verbunden ist, und andererseits einen ersten (32), zweiten (34) und dritten (36) Fluidausgang enthält, die mit einem ersten Zweig (57), der den Kühler (59) des Motors (54) enthält, einem zweiten Zweig (63), der eine Ableitung des Kühlers des Motors (54) bildet, bzw. einem dritten Zweig (63) verbunden sind, der einen Lufterhitzer (60) zur Erwärmung des Fahrzeuginnenraums enthält.

10. Kühlkreislauf nach dem vorhergehenden Anspruch, **dadurch gekennzeichnet, dass** das Einstellglied nacheinander mindestens die folgenden Stellungen einnehmen kann, wenn es in einer gegebenen Richtung in Drehung versetzt wird:
- eine Stellung "Kühler", in der das zweite Ausgangsrohr offen ist;
- eine Stellung "Kühler + Ableitung", in der das erste Ausgangsrohr und das zweite Ausgangsrohr teilweise offen sind;
- eine Stellung "Ableitung", in der das erste Ausgangsrohr offen ist;
- eine Stellung "Nulldurchsatz", in der kein Ausgangsrohr offen ist;
- eine Stellung "Lufterhitzer", in der das dritte Ausgangsrohr offen ist;
- eine Stellung "Lufterhitzer + Ableitung", in der das erste Ausgangsrohr und das dritte Ausgangsrohr teilweise offen sind;
- eine Stellung "Kühler + Ableitung + Lufterhitzer" in der das erste Ausgangsrohr, das zweite Ausgangsrohr und das dritte Ausgangsrohr teilweise offen sind;
- eine Stellung "Kühler + Lufterhitzer", in der das zweite Ausgangsrohr und das dritte Ausgangsrohr teilweise offen sind.
